# EUROPEAN PATENT APPLICATION

(11) **EP 2 378 799 A1**
(43) Date of publication of application: **19.10.2011**
(21) Application number: 11158791.1
(22) Date of filing: 18.03.2011
(51) Int. Cl.: H04W 8/18, H04W 8/22, H04L 29/08

(54) **Method and System for Managing Status Information of a User of a Mobile Device**

(30) Priority: 18.03.2010 US 340488 P
(71) Applicant: BLC Wireless Oy, 60120 Seinäjoki (FI)
(72) Inventor: Vähälummukka, Veli-Pekka, 60120, Seinäjoki (FI)
(74) Representative: Viering, Jentschura & Partner

(57) **Abstract**

The invention provides a method and system for managing status information of a user of a mobile device (104) in a telecommunication network (102). In one implementation, the system includes a client application (204) residing on the mobile device (202) of the user. The client application determines the status information of the user of the mobile device (302). The client application further includes a monitoring module (208) for monitoring one or more of one or more applications and a status of one or more communication channels of the mobile device to determine the status information of the user. The system further includes a server (106) communicatively connected to the client application using one or more of a data channel and a control channel of the telecommunication network for receiving the status information of the user. Thereafter, the server (106) may provide the status information of the user to one or more consuming entities (108-1,108-2,108-3).

## Description

### FIELD OF THE INVENTION

The present invention generally relates to managing status information of a user of a mobile device in a telecommunication network. More specifically, the invention relates to sharing the status information of the user of the mobile device with one or more consuming entities.

### BACKGROUND OF THE INVENTION

Status information corresponding to a mobile device in a telecommunication network may include, but need not be limited to, an activity status of a voice channel used by the mobile device for voice communications. Conventionally, in the telecommunication network, the status information is transmitted over the voice channel. Hence, the status information transmitted over the voice channel is dependent on various voice channel protocols used by the telecommunication network. Moreover, the status information of a user of the mobile device is not available to callers or applications associated with other network operators or service providers before communicating with the user of the mobile device.

There is, therefore, a need for an improved method and system for efficiently managing and sharing status information of a user of a mobile device in a telecommunication network.

### BRIEF DESCRIPTION OF THE FIGURES

The accompanying figures, where like reference numerals refer to identical or functionally similar elements throughout the separate views and which together with the detailed description below are incorporated in and form part of the specification, serve to further illustrate various embodiments and to explain various principles and advantages all in accordance with the invention.

FIG. 1 illustrates an environment in which various embodiments of the invention may function.

FIG. 2 illustrates a system for managing status information of a user of a mobile device in a telecommunication network in accordance with an embodiment of the invention.

FIG. 3 illustrates a method of managing status information of a user of a mobile device in a telecommunication network in accordance with an embodiment of the invention.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the invention.

### DETAILED DESCRIPTION OF THE INVENTION

As required, embodiments of the invention are disclosed herein; however, it is to be understood that the disclosed embodiments are merely exemplary of the invention, which can be embodied in various forms. Therefore, specific functional details disclosed herein are not to be interpreted as limiting, but merely as a representative basis for teaching one skilled in the art to variously employ the invention in virtually any appropriately detailed structure. Further, the terms and phrases used herein are not intended to be limiting but rather to provide an understandable description of the invention.

The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly, and not necessarily mechanically. The terms program, software application, and the like as used herein, are defined as a sequence of instructions designed for execution on a computer system. A program, computer program, or software application may include a subroutine, a function, a procedure, an object method, an object implementation, an executable application, an applet, a servlet, a source code, an object code, a shared library/dynamic load library and/or other sequence of instructions designed for execution on a computer system.

Various embodiments of the invention provide a method and system for managing status information of a user of a mobile device in a telecommunication network. In one implementation, the system includes a client application residing on the mobile device of the user. The client application determines the status information of the user of the mobile device. The client application includes a monitoring module for monitoring one or more of one or more applications and a status of one or more communication channels of the mobile device to determine the status information of the user. The system further includes a server communicatively connected to the client application using one or more of a data channel and a control channel of the telecommunication network for receiving the status information of the user. Thereafter, the server may provide the status information of the user to one or more consuming entities.

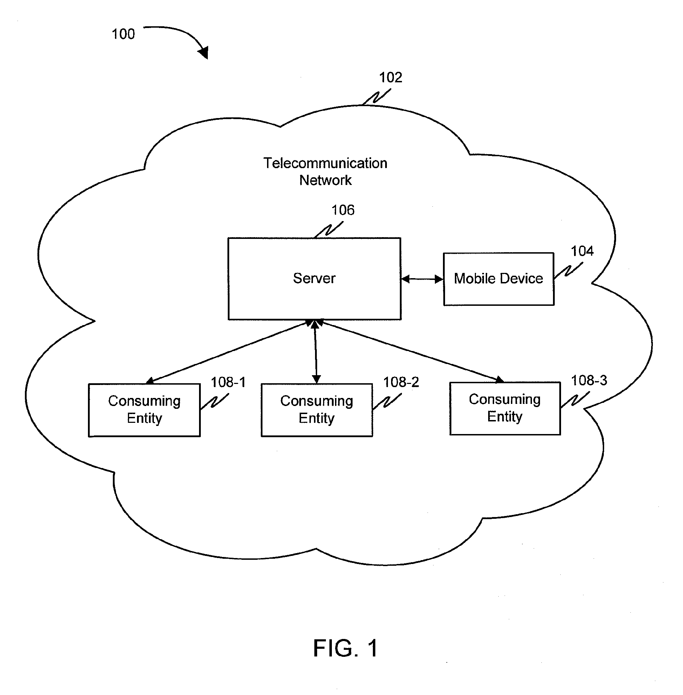

FIG. 1 illustrates an environment 100 in which various embodiments of the invention may function. Environment 100 includes a telecommunication network 102. Examples of a telecommunication network may include, but are not limited to a Wireless Interoperability Microwave Access (WiMAX) communication network, a 3rd Generation Partnership Project (3GPP), Long Term Evolution (LTE) network, a 3rd Generation Partnership Project 2 (3GPP2), Ultra Mobile Broadband (UMB) network, a Wireless Fidelity (WiFi) network, and any variant of an Orthogonal Frequency Division Multiple Access (OFDMA) communication network.

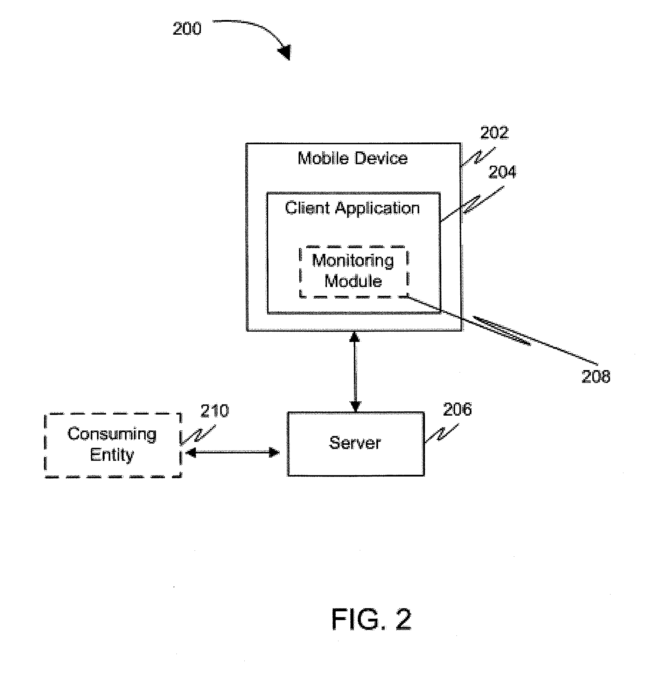

Telecommunication network 102 includes a mobile device 104 communicatively connected to a server 106. Examples of a mobile device, such as mobile device 104 may include, but are not limited to, a mobile phone, a Personal Digital Assistant (PDA), a and Wireless Local Loop (WLL) phone. Telecommunication network 102 also includes one or more consuming entities 108-n (herein after referred as consuming entities 108-n) communicatively connected to server 106. Consuming entities 108-n includes a consuming entity 108-1, a consuming entity 108-2, and a consuming entity 108-3. In an instance, consuming entities 108-n may be communicatively connected to mobile device 104 (not shown in FIG. 1). In an embodiment, status information of a user of a mobile device, such as mobile device 104 is shared between mobile device 104 and server 106. The status information of a user of a mobile device, such as mobile device 104 may include, but is not limited to, available, unavailable, and busy. The method of sharing the status information of the user between a mobile device and a server is explained in detail in conjunction with FIG. 2. Further, the status information of the user may be shared between server 106 and consuming entities 108-n. The method of sharing the status information of the user between a server and one or more consuming entities is explained in detail in conjunction with FIG. 2.

FIG. 2 illustrates a system 200 for managing status information of a user of a mobile device 202 in a telecommunication network in accordance with an embodiment of the invention. Examples of a mobile device, such as mobile device 202 may include, but are not limited to, a mobile phone, a Personal Digital Assistant (PDA), and a Wireless Local Loop (WLL) phone. System 200 includes a client application 204 residing on mobile device 202. Client application 204 is configured to determine the status information of the user of mobile device 202. The status information of the user may include status of one or more of a user using mobile device 202 and status of mobile device 202 such as "in a meeting for another 15 minutes", "mobile device in silent profile", "will be in a meeting after 15 minutes" etc. System 200 further includes a server 206 communicatively connected to client application 204. Server 206 may be communicatively connected to client application 204 using one or more of a data channel and a control channel. Examples of a server, such as server 206 may include, but are not limited to, a web server, a presence server, a database server, and a cloud server. Further server 206 may receive the status information of the user from client application 204 using the one or more of the data channel and the control channel.

In an embodiment, client application 204 includes a monitoring module 208 for determining the status information of the user of mobile device 202 as shown in FIG. 2. In a scenario, monitoring module 208 monitors one or more applications of mobile device 202 for determining the status information of the user. The one or more applications of a mobile device, such as mobile device 202 may be, but are not limited to, a calendar application, a notes application, an alarm application, a profile application, and an Instant Messaging (IM) application. In this case, the status information of the user may be determined as "in a meeting for another 15 minutes", "mobile device in silent profile", and "will be in a meeting after 15 minutes" etc. In an embodiment, the status information of the user may be determined from one or more calendar entries stored in a computer system associated with the user using mobile device 202. In another scenario, monitoring module 208 monitors a status of one or more communication channels of mobile device 202 for determining the status information of the user. The one or more communication channels may be, but are not limited to, a voice channel, a data channel, and a control channel. The status of one or more communication channels of a mobile device, such as mobile device 202 may be, but is not limited to, available, unavailable, and busy. For example, monitoring module 208 may monitor a voice channel of mobile device 202 and may determine the status of the voice channel as busy. In yet another scenario, monitoring module 208 monitors one or more of the one or more applications of mobile device 202 and the status of the one or more communication channels of mobile device 202 for determining the status information of the user of mobile device 202. Consider an example in which monitoring module 208 monitors a voice channel and a calendar application of mobile device 202. Upon monitoring the voice channel and the calendar application of mobile device 202, monitoring module 208 may determine status information of the user as "currently busy" and "will be in a meeting from 2 P.M. - 3 P.M.".

In another embodiment, a monitoring module may be an application residing on mobile device 202 (not shown in FIG. 2 for ease of representation). In this case, the monitoring module monitors one or more of the one or more applications of mobile device 202 and the status of the one or more communication channels of mobile device 202 for determining the status information of the user of mobile device 202. Once the status information is determined, the monitoring module communicates the status information of the user to client application 204.

Upon determining the status information of the user of mobile device 202, the status information of the user is shared between mobile device 202 and server 206. Server 206 may receive the status information over a data session established between mobile device 202 and server 206. The data session may be established between mobile device 202 and server 206 using one or more of a data channel and a control channel. In an embodiment, the status information is received by server 206 by establishing the data session over the data channel. In this scenario, the data session is established with server 206 using one or more of a Transfer Control Protocol/Internet Protocol (TCP/IP), Hyper Text Transfer Protocol (HTTP), General Packet Radio Service (GPRS), Enhanced Data rates for GSM Evolution (EDGE), Wireless Application Protocol (WAP), Universal Mobile Telecommunications System (UMTS), Code Division Multiple Access (CDMA), CDMA 2000, Wideband-CDMA (W-CDMA), High-Speed Downlink Packet Access (HSDPA), Ultra Mobile Broadband (UMB), Long Term Evolution (LTE), Worldwide Interoperability for Microwave Access (WiMAX) and Wireless Local Area Network (WLAN). In another embodiment, the status information is received by server 206 by establishing the data session over the control channel. In this scenario, the status information is received using one or more of a Short Message Service (SMS) and Unstructured Supplementary Service Data (USSD).

In an embodiment, the status information of the user of mobile device 202 is is shared with server 206 based on one or more changes in the status information of the user. In such a case, the mobile device 202 is monitored by monitoring module 208 to detect the one or more changes in the status information. Accordingly, in an embodiment, the status information is transmitted using the one or more of the data channel and the control channel when the status information has changed. For example, the status information may have changed from "mobile device in silent profile" to "mobile device in general profile". In such a case, the updated status information of the user corresponding to mobile device 202 is transmitted to server 206.

Alternatively, in another embodiment, the status information of the user of mobile device 202 is shared with server 206 upon receiving a request for the status information from server 206. In such a case, the request for the status information may be transmitted over a data session established between mobile device 202 and server 206 using one or more of a data channel and a control channel. In an embodiment, server 206 may transmit the request for the status information to mobile device 202 at periodic time intervals. Alternatively, the request for the status information may be transmitted when one or more consuming entities, such as a consuming entity 210 request server 206 for the status information of the user of mobile device 202. Examples of a consuming entity, such as consuming entity 210 may include, but is not limited to, a mobile device, a server, a mobile switchboard, and a client application. Subsequently, based on the request for the status information from server 206, mobile device 202 transmits the status information to server 206.

In an embodiment, server 206 may process the status information received from mobile device 202 to generate a processed status information. While processing the status information, server 206 may analyze the status information, aggregate the status information, and categorize the status information to provide an informative status information to one or more consuming entities.

Subsequent to receiving the status information from mobile device 202, server 206 stores one or more of the status information and the processed status information of the user of mobile device 202 in a database. Thereafter, server 206 provides the one or more of the status information and the processed status information to one or more consuming entities, such as consuming entity 210 as illustrated in FIG. 2.

Server 206 provides the one or more of the status information and the processed status information using the one or more communication channels. The one or more of status information and the processed status information may be provided using the data channel using one or more of a TCP/IP, HTTP, GPRS, EDGE, WAP, UMTS, CDMA, CDMA 2000, W-CDMA, HSDPA, UMB, LTE, WiMAX and WLAN. In case of the voice channel, the one or more of the status information and the processed status information are provided as a voice message. In case of the control channel, the one or more of status information and the processed status information are provided using one or more of a SMS and a USSD message.

In an exemplary embodiment, mobile device 202 is a mobile phone and consuming entity 210 is a mobile switchboard. In such an instance, server 206 may receive status information of the user of the mobile phone upon detecting one or more changes in the status information. Upon receiving the status information from the mobile phone, server 206 processes the status information to generate a processed status information. Subsequently, server 206 transmits one or more of the status information and the processed status information of the mobile phone to the mobile switchboard. In an embodiment, server 206 may transmit one or more of the status information and the processed status information in response to detecting a change in the status information of the mobile device. In another embodiment, server 206 may transmit the one or more of the status information and the processed status information to the mobile switchboard at periodic time intervals. In yet another embodiment, the one or more of the status information and the processed status information are transmitted to the mobile switchboard when the mobile switchboard sends a request for the status information to server 206. As a result, an operator of the mobile switchboard is able to determine the status information of the mobile phone before routing a call to the mobile phone and may provide the one or more of the status information and the processed status information to a caller attempting to establish a call with the mobile phone.

In another exemplary embodiment, mobile device 202 is a mobile phone and consuming entity 210 is a consuming mobile phone. In an instance, mobile phone may transmit status information of the user of the mobile phone to server 206 when there is a change in the status information. For example, when the status information changes from "busy" to "available", the updated status information i.e., "available" is transmitted to server 206. Subsequently, server 206 transmits the status information to the consuming mobile phone. In another instance, the consuming mobile phone may request for the status information of the user of the mobile phone. Accordingly, the status information of the user of the mobile phone is transmitted to server 206. Subsequently, server 206 transmits the status information to the consuming mobile phone. Alternatively, the mobile phone may transmit the status information to server 206 at periodic time intervals. In this case, server 206 receives the status information and transmits the status information to the consuming mobile phone at periodic time intervals. The status information may be used by a user of the consuming mobile phone to determine a status of the user of the mobile phone before attempting to establish a call with the user of the mobile phone.

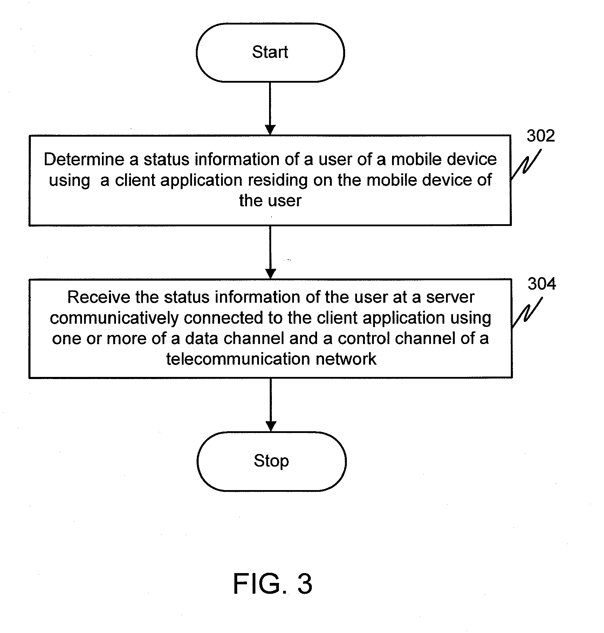

FIG. 3 illustrates a method of managing status information of a user of a mobile device in a telecommunication network in accordance with an embodiment of the invention. Examples of a telecommunication network may include, but are not limited to a Wireless Interoperability Microwave Access (WiMAX) communication network, a 3rd Generation Partnership Project (3GPP), Long Term Evolution (LTE) network, a 3rd Generation Partnership Project 2 (3GPP2), Ultra Mobile Broadband (UMB) network, a Wireless Fidelity (WiFi) network, and any variant of an Orthogonal Frequency Division Multiple Access (OFDMA) communication network. As shown in FIG. 3, the status information of the user of the mobile device is determined using a client application residing on the mobile device of the user at step 302. For example, status information of a user of a mobile device 202 is determined using client application 204 residing on mobile device 202 of the user. Examples of a mobile device may include, but are not limited to, a mobile phone, a Personal Digital Assistant (PDA), and a Wireless Local Loop (WLL) phone.

In order to determine the status information of the user of the mobile device, one or more of one or more applications of the mobile device and a status of one or more communication channels of the mobile device are monitored. The one or more communication channels may be, but are not limited to, a voice channel, a data channel, and a control channel. The status of the one or more communication channels of the mobile device may be, but is not limited to, available, unavailable, and busy. The one or more of the one or more applications of the mobile device and the status of the one or more communication channels of the mobile device are monitored using a monitoring module, such as monitoring module 208. Upon determining the status information of the user of the mobile device, the status information of the user is received at a server communicatively connected to the client application. The status information of the user is received at the server using one or more of a data channel and a control channel of the telecommunication network at step 304. For example, the status information of the user is received at server 206 using one or more of a data channel and a control channel of the telecommunication network. In an embodiment, the status information of the user may be received by the server at periodic time intervals. In another embodiment, the status information of the user is received by the server in response to a change in the status information of the user. Thereafter, the server may provide the status information of the user to one or more consuming entities, such as consuming entity 210. The one or more consuming entities may be, but are not limited to, a mobile device, a server, a mobile switchboard, and a client application.

Various embodiments of the invention provide a method and system for managing status information of a user of a mobile device in a telecommunication network. The mobile device uses one or more of a data channel and a control channel to transmit the status information of the user of the mobile device. Accordingly, the mobile device establishes a data session with a server using the one or more of the data channel and the control channel. The data session ensures that the transmission of the status information from the mobile device is separate from the voice channel used by the mobile device for voice communication. Hence, the transmission of the status information is independent of various voice channel protocols used within the telecommunication network. Further, various consuming entities can access the status information from a single server. In addition, the server provides status information of a user belonging to a network operator or a service provider to various consuming entities belonging to other network operators or service providers before communicating with the user.

Those skilled in the art will realize that the above-recognized advantages and other advantages described herein are merely exemplary and are not meant to be a complete rendering of all of the advantages of the various embodiments of the invention.

In the foregoing specification, the invention has been described with reference to specific exemplary embodiments thereof. It will, however, be evident that various modifications and changes may be made thereto without departing from the broader spirit and scope of the invention.

Such embodiments of the inventive subject matter may be referred to herein individually or collectively by the term "invention" merely for convenience and without intending to voluntarily limit the scope of this application to any single invention or inventive concept, if more than one is in fact disclosed. Thus, although specific embodiments have been illustrated and described herein, any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of ordinary skill in the art upon reviewing the above description.

## Claims

1. A system for managing status information of a user of a mobile device in a telecommunication network, the system comprising:
a client application residing on the mobile device of the user, wherein the client application is configured to determine the status information of the user of the mobile device; and
a server communicatively connected to the client application using at least one of a data channel and a control channel of the telecommunication network for receiving the status information of the user.

2. The system of claim 1, wherein the client application comprises a monitoring module, wherein the monitoring module monitors at least one of at least one application of the mobile device and a status of at least one communication channel of the mobile device.

3. The system of claim 2, wherein the at least one application of the mobile device comprises at least one of a calendar application, a notes application, an alarm application, a profile application, and an Instant Messaging (IM) application.

4. The system of claim 2, wherein the status of the at least one communication channel of the mobile device is one of available, unavailable, and busy.

5. The system of claim 2, wherein the at least one communication channel of the telecommunication network is at least one of a voice channel, a data channel, and a control channel.

6. The system of claim 1, wherein the client application and the server communicate at periodic time intervals for sharing the status information of the user.

7. The system of claim 1, wherein the client application and the server communicate in response to a change in the status information of the user for sharing the status information of the user.

8. The system of claim 1, wherein the server is configured to provide the status information of the user to at least one consuming entity.

9. The system of claim 8, wherein the at least one consuming entity comprises at least one of a mobile device, a server, a mobile switchboard, and a client application.

10. The system of claim 1, wherein the status information is communicated over the data channel using at least one of Transfer Control Protocol/Internet Protocol (TCP/IP), Hyper Text Transfer Protocol (HTTP), General Packet Radio Service (GPRS), Enhanced Data rates for GSM Evolution (EDGE), Wireless Application Protocol (WAP), Universal Mobile Telecommunications System (UMTS), Code Division Multiple Access (CDMA), CDMA 2000, Wideband-CDMA (W-CDMA), High-Speed Downlink Packet Access (HSDPA), Ultra Mobile Broadband (UMB), Long Term Evolution (LTE), Worldwide Interoperability for Microwave Access (WiMAX) and Wireless Local Area Network (WLAN).

11. The system of claim 1, wherein the status information is communicated over the control channel using at least one of Short Message Service (SMS) and Unstructured Supplementary Service Data (USSD).

12. A method of managing status information of a user of a mobile device in a telecommunication network, the method comprising:
determining the status information of the user of the mobile device using a client application residing on the mobile device of the user; and
receiving the status information of the user at a server communicatively connected to the client application using at least one of a data channel and a control channel of the telecommunication network.

13. The method of claim 12, wherein determining the status information of the user comprises monitoring at least one of at least one application of the mobile device and a status of at least one communication channel of the mobile device.

14. The method of claim 12, wherein the status information of the user is received by the server at periodic time intervals.

15. The method of claim 12, wherein the status information of the user is received by the server in response to a change in the status information of the user.

16. The method of claim 12 further comprising providing the status information of the user to at least one consuming entity.

17. The method of claim 16, wherein the at least one consuming entity comprises at least one of a mobile device, a server, a mobile switchboard, and a client application.
